# EUROPÄISCHE PATENTANMELDUNG

(11) **EP 3 561 748 A1**
(43) Veröffentlichungstag der Anmeldung: **30.10.2019**
(21) Anmeldenummer: 18168757.5
(22) Anmeldetag: 23.04.2018
(51) Int. Cl.: G06Q 10/08, G07B 17/00

(54) **VERFAHREN UND SYSTEM ZUR FREIMACHUNG POSTALISCHER SENDUNGEN UND ZUR ABRECHNUNG EINER LOGISTIKLEISTUNG**

(71) Anmelder: Siemens Aktiengesellschaft, 80333 München (DE)
(72) Erfinder: Schmitt, Holger, 67258 Hessheim (DE); Zettler, Michael, 78476 Allensbach (DE); Dodel, Jan, 78464 Konstanz (DE); Büker, Michael, 85579 Neubiberg (DE); Bayer, Thomas, 96114 Hirchfeld (DE); Sturm, Monika, 1190 Wien (AT)
(74) Vertreter: Maier, Daniel Oliver

(57) **Zusammenfassung**

Zur Verhinderung von Fälschungen von Postwertzeichen (W) und zur verursachergerechten Abrechnung einer Logistikleistung zwischen verschiedenen Postdienstleistern (P₁, P₂) wird ein computerimplementiertes Verfahren zur Freimachung postalischer Sendungen (S) vorgeschlagen. Der Sendungsverlauf wird durch Leser (R) erfasst und zusammen mit der zugehörigen Freimachungsidentifikation (W-Id) in Knoten (N₁, Nᵢ₊₁) einer Blockchain (B) als Transaktion abgelegt. Dabei wird auch die Zugehörigkeit der Leser (R) zu einem Postdienstleister (P) mit erfasst.

Die verursachergerechte Abrechnung der erbrachten Logistikleistung erfolgt durch eine Auswertung der wenigstens einem Postdienstleister (P1, P2) zuzuordnenden in der Blockchain (B) gespeicherten Transaktionen.

## Beschreibung

Die vorliegende Erfindung bezieht sich auf ein Verfahren zur Freimachung postalischer Sendungen und zur Abrechnung einer Logistikleistung gemäss dem Patentanspruch 1 sowie ein System zur Abrechnung einer Logistikleistung zwischen Postdienstleistern.

Die Freimachung bzw. Frankierung postalischer Sendungen und Dienstleistungen sowie deren Verrechnung basiert heute im Wesentlichen auf:
a) Freimachung/Frankierung mittels vorausbezahlter Briefmarke,
b) Freimachung mittels Freistempler zzgl. Barcode und Freistempler-Identität, vorausbezahlt oder mittels Abrechnung aufgrund eines Zählers (Frankiermaschine),
c) Freimachung mittels gedruckter Barcodes und anschliessender Zählung und/oder Wägung für eine Volumen- und/oder Gewicht-basierte Abrechnung.

Die Vergangenheit und Gegenwart zeigt, dass diese Vorgehensweise mangels Verifizierbarkeit von Freimachungen betrügerisch hintergangen werden kann in dem
a) Briefmarken gefälscht werden,
b) Freistempler Barcodes mehrfach genutzt werden und
c) Barcodes kopiert werden.

Dies führt bei den postalischen Dienstleistern zu signifikanten Verlusten und/oder zu hohen Investitionen zum Beispiel im Bereich des Designs und der Erkennung fälschungssicherer Briefmarken bzw. fälschungssicherer Wertzeichen.

Unabhängig von der Form Briefmarke, Barcode, usw. wird hier im Folgenden der technologie-neutrale Begriff Postwertzeichen oder kurz Wertzeichen verwendet. Briefe; Grossbriefe, Massensendungen oder Pakete werden nachfolgend unter den synonymen Begriffen «Sendungen» bzw. «Sendungseinheiten» subsummiert und zwar abhängig von der Betrachtung im Singular oder im Plural.

Werden Sendungen zB von Deutschland nach USA befördert, dann kann der sendende Postdienstleister (in diesem Fall zB DP DHL) dem empfangenden Postdienstleister im Voraus eine Gebühr (in diesem Fall zB United States Postal Service USPS https://www.usps.com) entrichten, weil der empfangende Postdienstleister einen Teil der Dienstleistung erbringt, nämlich die Übernahme der Sendung und deren Zustellung an einen Empfänger.

Anstelle einer fixen Gebühr im Voraus kann die Vergütung zwischen den Postdienstleistern auch in einem Nachgang - genau in einem «post processing» - vorgenommen werden. Dazu bürgt die IPC (International Postal Corporation https://www.ipc.be/ dafür, dass ein möglichst gerechter Finanzausgleich zwischen den involvierten Postdienstleistern vorgenommen wird.

Die IPC misst dazu die Brief- und Paketströme (Anzahl, Laufzeit) zwischen den Ländern einschliesslich der involvierten Postdienstleister und deren Servicequalität. Liefert ein Land bzw. ein Postdienstleister nicht zufriedenstellende, also überlange Laufzeiten, wird ein Malus eingerechnet. Zusätzlich gibt es in jedem teilnehmenden Land Personen, die stichprobenartig Sendungen erstellen, versenden und empfangen und die Sendungsdaten (Art der Sendung, Aufgabeort, Aufgabezeit, Zustellungsort, Zustellungszeit) in ein IT-System der IPC einspielen. Der gesamte Prozess ist aufwändig und damit teuer und die Genauigkeit auf Grund kleiner Stichproben fragwürdig.

Der vorliegenden Erfindung liegt daher die Aufgabe zugrunde ein fälschungssicheres Verfahren und ein System zur Freimachung/ Frankierung postalischer Sendungen und zur verursacher-gerechten Abrechnung der entsprechenden Logistikleistung anzugeben, die die vorstehend erwähnten Mängel beheben und leicht in die bestehende Postverarbeitung implementiert werden können.

Diese Aufgabe wird durch das im Patentanspruch 1 angegebene, computerimplementierte Verfahren und durch das im Patentanspruch 12 angegebene System gelöst. Vorteilhafte Ausgestaltungen der Erfindung sind in weiteren Ansprüchen angegeben.

Das erfindungsgemässe computerimplementierte Verfahren zur Freimachung postalischer Sendungen und zur Abrechnung einer Logistikleistung zwischen Postdienstleistern weist folgende Verfahrensschritte auf:
- Anbringen eines maschinenlesbaren und eine eindeutige Freimachungsidentifikation (W-Id) aufweisenden Wertzeichens (W) auf einer zu befördernden Sendung (S),
- Beförderung der Sendung (S) von einem Absender (1) und Zustellung zu einem Empfänger (23) durch Postdienstleister (P; P₁, P₂) als Logistikleistung;
- die Freimachungsidentifikation (F-Id) ist in einem Knoten (Nᵢ) einer Blockchain (B) gespeichert;
- die Freimachungsidentifikation (W-Id) des auf der zu befördernden Sendung (S) angebrachten Wertzeichens (W) wird in einer Anlage (10, 11) eines ersten Postdienstleisters (P₁) durch einen Leser (R) erfasst;
- die erfasste Freimachungsidentifikation (W-Id) wird mit der im betreffenden Knoten (Nᵢ) der Blockchain (B) gespeicherten Freimachungsidentifikation (F-Id) verglichen;
- bei Feststellung von Gleichheit gilt die Freimachungsidentifikation (F-Id) als «aktiv» und wird als Transaktion in einem Knoten (Nᵢ) der Blockchain (B) als aktiv gespeichert;
- bei der weiteren Beförderung der Sendung (S) durch Anlagen (10, 11, 20, 21, 22) der Postdienstleister (P₁, P₂) wird die auf der Sendung (S) angebrachte Freimachungsidentifikation (W-Id) durch der jeweiligen Anlage (10, 11, 20, 21, 22) zugeordnete Leser (R) erfasst und zusammen mit der Identität der Anlage (10, 11, 20, 21, 22) einschliesslich der Identität des betreffenden Postdienstleisters (P₁, P₂) und einem Zeitstempel der Erfassung in einem Knoten (N_{i'}) der Blockchain (B) als Transaktion gespeichert;
- die Abrechnung der Logistikleistung erfolgt durch eine Auswertung der wenigstens einem Postdienstleister (P₁, P₂) zuzuordnenden in der Blockchain (B) gespeicherten Transaktionen.

So können sich die folgenden Vorteile zusätzlich ergeben:
i) Ein Kopierschutz von Wertzeichen ist dadurch sichergestellt, als beim ersten Erfassen eines solchen Wertzeichens dessen Freimachungsidentität in der Blockchain gespeichert ist. Wird die gleiche Identität eines Wertzeichens später nochmals als "erstes Erfassen" registriert, kann dies aufgrund der gesicherten Ablage der Freimachungsidentität in einem Knoten der Blockchain festgestellt werden und die entsprechende Sendung kann aussortiert werden.
ii) Ein Kopierschutz von Wertzeichen kann weiter dadurch sichergestellt werden, wenn die Übertragung der Freimachungsidentität end-to-end verschlüsselt wird.
iii) Das erste Erfassen der Identität eines Wertzeichens erfolgt vorzugsweise bei der Abgangssortierung. Ein weiterer Erfassungsort ist bei der Aufgabe einer Sendung an einem Postschalter vorgesehen. Da auch solche Sendungen später bei der Abgangssortierung nochmals "ersterfasst" werden, muss sichergestellt werden, dass solche Sendungen nicht aufgrund einer als bereits aktivierten Freimachungsidentität als "kopiert" ausgeschleust werden. Ein solches Nichtausschleusen wird durch die Identität des Erfassungsgerätes - auch Lesegerät oder Leser genannt - und durch einen Plausibilitätscheck der Zeitstempel bei der Erfassung erreicht.
iv) Die Abrechnung der Logistikleistung zwischen den involvierten Postdienstleistern kann automatisiert vorgenommen werden. Da der sendende Postdienstleister gegenüber seinem Kunden ggf. eine Verpflichtung zur Zeitdauer bis zu einer Zustellung eingegangen ist, erlaubt die gesicherte Ablage der Daten des Verlaufs einer Sendung bis zum Empfänger, dass eine allfällig geschuldete Rückzahlung an den Absender verursachergerecht auf denjenigen Postdienstleister abgewälzt werden, der für eine Verzögerung letztlich verantwortlich zeichnet.
vi) Eine vertrauensvolle und belastbare Abrechnung der Logistikleistung zwischen den involvierten Postdienstleistern erfolgt vorzugsweise mit einem Smartcontract, dessen ausführbarer Code ebenfalls in wenigstens einem Knoten der Blockchain abgelegt ist.
vii) Während bei den klassischen Wertzeichen der (Geld-)Wert zu Beginn bei Aufgabe der Sendung bestimmt ist, erlaubt die vorliegende Erfindung auch eine Abrechnung zuhanden der Postbenutzer auch nach einer Zustellung einer Sendung in einem sogenannten Debitverfahren. Da auch noch die übrigen Daten des Sendungsverlaufes einer jeden Sendung in der Blockchain gespeichert sind, kann die Abrechnung auch noch eine allfällige Reduktion (Malus-Einbezug) nach einer verspäteten Zustellung beinhalten, wobei die Rechtzeitigkeit von Zustellungen in einem Service Level Agreement definiert ist. Dieses Service Level Agreement kann in einem weiteren SmartContract als ausführbarer Code enthalten sein.

Die Erfindung wird nachfolgend anhand der Zeichnung beispielsweise näher erläutert. Dabei zeigen:
Figur 1 Verlauf einer Sendung S bis zur Zustellung 22 beim Empfänger 23;
Figur 2 Struktur der Inhalte von Knoten einer Blockchain;
Figur 3 Prinzipdarstellung des Zugriffs auf eine Blockchain B und der Datenkonsumenten und der Datenproduzenten.

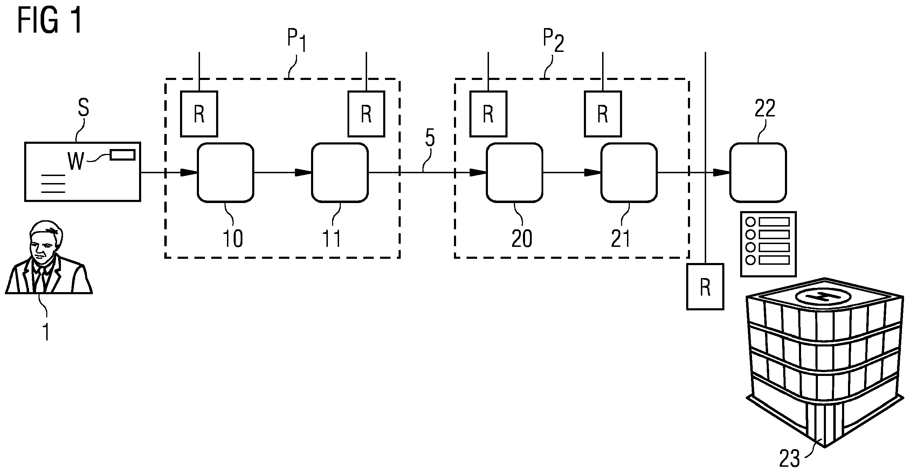

Figur 1 zeigt den Verlauf einer von einem Absender 1 aufgegebenen Sendung S. Es wird hier der Fall angenommen, wo eine Sendung S von einem ersten Postdienstleister P₁ - auch «sendender» Postdienstleister genannt - in einem Land A entgegengenommen wird und dann über einen Transport 5 zu einem zweiten Postdienstleister P₂ - auch «empfangender» Postdienstleister genannt - in einem Land B befördert wird bis zur Zustellung 22 bei einem Empfänger 23. Diese Darstellung gemäss der Figur 1 ist auch bei einer Inlandzustellung zutreffend, es sind lediglich der erste Postdienstleister P₁ und zweite Postdienstleister P₂ gemäss der Figur 1 als identisch zu betrachten. Für die Ausführung der Erfindung ist auch noch folgender, in der Figur 1 nicht dargestellte Fall möglich: Es können auch drei verschiedene Postdienstleister in die Beförderung einer Sendung involviert sein, der "mittlere" Postdienstleister befasst sich dabei mit dem "Langstreckentransport" der Sendungen. Für diesen Fall brauchen lediglich die Parameter bei der Erfassung der Sendungen S durch Leser R entsprechend angepasst zu werden.

Der in der Figur 1 dargestellte Verlauf einer Sendung S schliesst ein, dass Sendungen S sowohl via Briefkasten oder via eine Poststelle einem Postdienstleister P zur Beförderung übergeben werden können. Die Sendung S wird eingesammelt - dargestellt durch die Einheit 10 - und anschliessend einer Abgangssortierung 11 unterzogen.
Die so sortierten Sendungen S werden entsprechend der sogenannten Sendungsrichtung transportiert, sei es auf dem Land-, Luft- oder Seeweg. Die Sendungen S werden einer Eingangssortierung 20 entsprechend den Zustellstützpunkten 21 sortiert. Ab den Zustellstützpunkten 21 erfolgt die Zustellung 22 zu den Empfängern 23.

Für die Freimachung der Sendungen S werden entsprechend der Menge der zu befördernden Sendungen Freimachungsidentitäten benötigt.

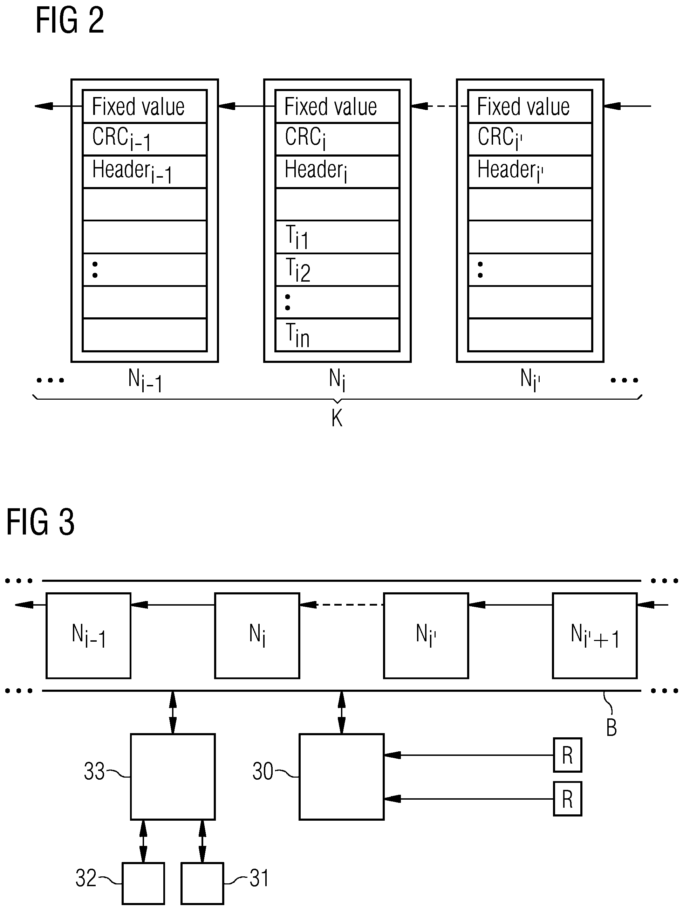

Eine von einem Postdienstleister P oder von einer Postüberwachungsbehörde autorisierte Stelle generiert eindeutige Freimachungsidentitäten F-Idᵢ entsprechend einer Mächtigkeit, die dem Bedarf des betreffenden Postdienstleisters P für eine bestimmte Periode entspricht, zB für einen Monat. Typischerweise kann es sich hier um mehrere Millionen Sendungen S pro Tag handeln. In Deutschland könnte als autorisierte Stelle zB die Bundesdruckerei vorgesehen sein. Im Kontext mit dieser Beschreibung wird die autorisierte Stelle "Freimachungsidentitätsherausgeber 32" genannt. Im Folgenden wird nun auf die Figur 3 Bezug genommen. Diese Vielzahl von Freimachungsidentitäten F-Idᵢ wird gesichert über ein Wallet 33 in Knoten Nᵢ , Nᵢ₊₁ , ..., einer Blockchain B abgelegt. Anstelle des Begriffs Knoten wird der Begriff Block synonym verwendet. Für die Folge von Freimachungsidentitäten F-Idⱼ bezeichnet j einen Index zur Nummerierung der Freimachungsidentitäten F-Id bzw. F-Idⱼ.

Zunächst wird der Vorgang der Freimachung bzw. der Frankierung der Sendungen S beschrieben. Dazu werden Wertzeichen W benötigt. Die Folge der vorstehenden eingeführten Freimachungsidentitäten F-Idᵢ wird abhängig vom Absender 1 wie folgt auf Wertzeichen W für die Freimachung von Sendungen S gebracht:

### I Freimachung von Einzelsendungen

Für Einzelsendungen S werden Wertzeichen W benötigt, die mit Briefmarken vergleichbar sind: Eine Wertzeichendruckerei 31 (nicht zu verwechseln mit der vorgenannten Bundesdruckerei) holt sich über ein Wallet 33 von einem Knoten Nₖ einen Bereich von Freimachungsidentitäten F-Id₁, ... , F-Id_{I}. I steht vorstehend für eine bestimmte Anzahl von solchen Freimachungsidentitäten. Mit dem Abholen dieser Freimachungsidentitäten F-Idᵢ wird der vorstehend genannte Bereich von Freimachungsidentitäten F-Id₁, ... , F-Idᵢ in der Blockchain B als «verbraucht» gekennzeichnet. Aus einem solchen Bereich von Freimachungsidentitäten F-Id₁, ... , F-Idᵢ stellt die Wertzeichendruckerei eindeutige Wertzeichen W her (eindeutig iSv. injektiv), die beispielsweise als QR-Code [1] gedruckt werden. Der Vorgang des vorgenannten Abholens dieser Freimachungs¬identitäten F-Idᵢ kann wie folgt zusätzlich gesichert werden:
Wenn einer der Absender 1 Wertzeichen W kaufen will, bekommt er eine Folge von gültigen aber verschlüsselten Freimachungsidentitäten vF-Idᵢ. Diese sind mit einem Schlüssel verschlüsselt, nämlich bei der Generierung der Freimachungsidentitäten F-Idᵢ durch die autorisierte Stelle 32. Ein verschlüsseltes digitales Äquivalent wird auf den Brief oder das Paket gedruckt - vorzugsweise als QR-Code [1].

Alternativ zur Herstellung einer Vielzahl von Wertzeichen W ist es auch möglich, dass individuell via einen Online-Zugang über den Postdienstleister P ein Kunde ein Wertzeichen W erwirbt, das er zuhause ausdrucken und auf einer Einzelsendung S anbringen kann. Das Wertzeichen W ist vorzugsweise als QR-Code [1] ausgeführt. Der Vorgang ist analog wie vorstehend beschrieben, wonach eine solche so bezogene Freimachungsidentität F-Id in der Blockchain B als «verbraucht» gekennzeichnet wird. Der Kunde greift dabei nicht direkt auf die Blockchain B zu, sondern auf eine Applikation des Postdienstleisters, die den Zugriff auf eine Freimachungsidentität F-Id über ein Wallet 33 der Blockchain B erlaubt. Das so erzeugte Wertzeichen W enthält eine Freimachungsidentität W-Id, die der in der Blcokchain gespeicherten Freimachungsidentität F-Id entspricht.

### II Freistempler-Einrichtungen

Für Unternehmungen mit einem erheblichem Volumen an zu spedierenden Sendungen S sind sogenannte Freistempler im Einsatz. Bezüglich einer Ausführungsform der vorliegenden Erfindung sind solche Freistempler-Einrichtungen online via eine Applikation des betreffenden Postdienstleisters mit der vorerwähnten Blockchain B über ein Wallet 33 verbindbar. Entsprechend der benötigten Anzahl von Freimachungsidentitäten werden Freimachungsidentitäten F-Id₁, ... , F-Idᵢ zur Freistempler-Einrichtung transferiert, die diese Freimachungsidentitäten auf die Sendungen S aufbringt bzw. codiert aufstempelt, vorzugsweise wiederum als QR-Code [1]. Dabei wird wie schon vorstehend erwähnt, der transferierte Bereich in der Blockchain als «verbraucht» gekennzeichnet. Das aufgestempelte Wertzeichen W enthält eine Freimachungsidentität W-Id, die der Freimachungsidentität F-Id entspricht.

### III Grossauslieferer

Grossauslieferer unterscheiden sich von den Kunden mit Freistemplereinrichtungen durch ein besonders hohes Volumen an auszuliefernden Sendungen S und durch Vorleistungen wie zB eine Vorsortierung der Sendungen S. Die Abläufe zur Freimachung solcher Massensendungen unterscheiden sich eigentlich nicht von den Abläufen bei den Freistemplern und werden deshalb hier nicht nochmals aufgeführt.

Der vorstehend beschriebene Vorgang für Einzelsendungen S, Freistemplereinrichtungen und Grossauslieferer ist in der Figur 1 nicht dargestellt. In Figur 1 ist lediglich das Ergebnis, nämlich eine Sendung S mit einem wie vorstehend beschriebenen Wertzeichen W symbolisch dargestellt. Die Sendungen S werden eingesammelt bzw. von einem Absender 1 an einem Postschalter «aufgegeben» (nicht dargestellt in Figur 1). Entweder beim Postschalter oder bei der unmittelbar nachfolgenden Abgangssortierung 10 werden die auf den Sendungen S angebrachten Wertzeichen W von einem Leser R erfasst. Gleichzeitig oder vorgängig können weitere Parameter der Sendungen S erfasst werden wie zB Gewicht oder Dimension der Sendungen S (zB Grossbrief) oder die Destination der Sendungen S. Mindestens die erfasste Freimachungsidentität W-Idₖ wird vom Leser R via ein Oracle 30 zur Blockchain B übertragen und die korrespondierende Freimachungsidentität F-Idⱼ wird in der Blockchain B als «aktiv» gekennzeichnet. Diese Kennzeichnung als «aktiv» schliesst vorgängig folgende Prüfungen ein:
a) Ist die betreffende Freimachungsidentität F-Id als «verbraucht» gekennzeichnet? Wenn nicht, ist das zugehörige Wertzeichen W als ungültig zu betrachten, da das Wertzeichen W anders als gemäss dem definierten Prozessablauf generiert wurde und die betreffende Sendung S muss aus dem Sendungsstrom entfernt werden.
b) Ist die betreffende Freimachungsidentität F-Idⱼ bereits als «aktiv» gekennzeichnet? Wenn JA ist das betreffende Wertzeichen als (illegales) Duplikat anzusehen und die betreffende Sendung S muss aus dem Sendungsstrom entfernt werden.
Die vorstehende Entfernung solcher Sendungen S mit einem ungültigen Wertzeichen W erfolgt aufgrund der bereits bei den Postdienstleistern implementierten Automatisierung durch eine temporär erzeugte virtuelle Destination "ungültiges Wertzeichen" beim Sortiervorgang. Ein Oracle 30 ist eine in Hardware ausgeführte Schnittstelle zwischen der Infrastruktur (hier die Infrastruktur der Postdienstleister P) und einer Blockchain B. Die vorgenannte Prüfung schliesst ein, dass die gelesenen Freimachungsidentitäten W-Idₖ verschlüsselt übertragen werden und durch in einem Knoten gespeicherte Schlüssel entschlüsselt werden und dort in entschlüsselter Form geprüft werden. Zusätzlich zur Freimachungsidentität W-Idₖ können weitere zu dieser Freimachungsidentität W-Idₖ zugehörige Werte/Parameter gespeichert werden wie zB.
- Zeitstempel der Erfassung durch den Leser R,
- Leseridentität R-Id des Lesers R,
- Identität des Ortes und/oder
- Identität des Postdienstleisters Pₗ.

Die vorgenannte Prüfung der Gültigkeit einer erfassten Freimachungsidentität wird vorzugsweise mit einem ausführbaren Programmcode ausgeführt, der seinerseits in wenigstens einem Knoten Nᵢ der Blockchain B gespeichert ist. Dieser Programmcode wird vorzugsweise durch die Infrastruktur des verteilten Datenbanksystems (Blockchain) ausgeführt. Die Ausführungsumgebung und der Programmcode sind idealerweise Turing-vollständig [2].

Bei den weiteren Etappen der Sendungsbeförderung wie zB Eingangssortierung 20, Transport 5 oder Zustellstützpunkt 21 können weitere Leser R vorgesehen werden, die analog wie vorstehend beschrieben, die Freimachungsidentität W-Idₖ mit weiteren zugehörigen Werten/Parametern - wie vorstehenden erläutert - erfassen und zur Speicherung weitergeleitet werden.

Bei der letzten Sortierung vor der Zustellung 22 bewirkt die Erfassung der Freimachungsidentität W-Id durch einen Leser R aufgrund eines Parameters «letzte Verarbeitung»/«last handling» den folgenden besonderen Eintrag: Die bei dieser letzten Sortierung vor der Zustellung 22 übermittelte Freimachungsidentität W-Idₖ und weitere Werte wie zB die Identität R-Id des Lesers R und «last handling» bewirken, dass die Freimachungsidentität F-Idₖ als «entwertet» gekennzeichnet wird. Die Speicherung dieser vorstehend genannten Angaben in einem Node Nᵢ der Blockchain B kann erst nach einer Pufferung ausserhalb der Blockchain B erfolgen um Performance-Probleme zu reduzieren.

Für eine als «entwertet» gekennzeichnete Freimachungsidentität F-Idᵢ stehen somit in der Blockchain B folgende Informationen zur Verfügung:
- Verlauf der zur Freimachungsidentität F-Idᵢ zugehörigen Sendung S mit Zeitstempeln, Orten und zugehörigen Postdienstleistern P;
- Eigenschaften der Sendung S wie Destination, Dimension und Gewicht.
Diese vorgenannten Informationen bilden die Basis einer verursachergerechten Abrechnung zwischen den involvierten Postdienstleistern P1, P2, .... Diese Abrechnung wird vorzugsweise durch einen sogenannten SmartContract vorgenommen. Ein SmartContract ist als Transaktion in wenigstens einem Knoten Ni gespeichert. Die Form dieser Transaktion ist ausführbarer Programmcode mit den gleichen Bedingungen wie vorstehend beschrieben zur Prüfung der erfassten Freimachungsidentitäten W-Idₖ. Bei der verursachergerechten Abrechnung werden nur jene in Transaktionen gespeicherten Freimachungsidentitäten berücksichtigt, die als «verbraucht» eingetragen sind. Das Ergebnis dieser Abrechnung wird in einem den Postdienstleistern P1, P2, .... zugeordneten Wallets abgelegt.

Die in einem Knoten Nₖ einer Blockchain B gespeicherten Freimachungsidentitäten F-Id, F-Idᵢ können somit folgende Kennzeichnungen aufweisen:
- «neu»
   bei der Ablage der von der autorisierten Stelle 32 generierten Freimachungsidentitäten F-Id, F-Idᵢ;
- «aktiv»
   beim Abholen einer Freimachungsidentität F-Id um diese auf einem für eine Sendung S vorgesehenen Wertzeichen anzubringen;
- «verbraucht»
   beim erstmaligen Erfassen der Sendung S;
- «entwertet»
   vor der Zustellung an den Empfänger 23.

Ist nur ein Postdienstleister P involviert, können die bei der Abrechnung der Logistikleistung gewonnenen Daten für eine konzerninterne verursachergerechte Abrechnung pro PC (Profit Center) oder pro Region benutzt werden.

Es wird nochmals darauf hingewiesen, dass die vorstehend beschriebenen Eintragungen in Knoten Nᵢ einer Blockchain B nicht so zu verstehen sind, dass pro erfasster Sendung S ein Knoten Nᵢ in einer Blockchain B generiert wird. Die jeweiligen Erfassungen der Freimachungsidentität W-Idₖ (abgeleitet wie vorstehend beschrieben aus der Freimachungsidentität F-Idₖ) werden zusammengefasst und beispielsweise pro Zeitintervall von 10min oder pro Erfassungsort eines Postdienstleister P in einen Knoten Nᵢ eingetragen. Die von den Lesern R erfassten Freimachungsidentitäten W-Idₖ werden "off-chain" gepuffert und in einer definierten Anzahl pro Zeitintervall in einem Knoten Nᵢ der Blockchain B abgelegt.

Die vorliegende Erfindung ist auch geeignet für "lettres recommandees"/eingeschriebene Briefe mit oder ohne Rückschein. Eingeschriebene Briefe erfordern aus Beweisgründen eine besondere Aufgabe, sei es mit einem begleitenden Bordereau oder an einem Postschalter durch Ausstellen einer sogenannten Aufgabequittung. Bei den eingeschriebenen Briefen ist bei den meisten Postdienstleistern P auch eine Versicherung inbegriffen, die bei einem Verlust einer solchen Sendung S eine minimale finanzielle Entschädigung leistet (nicht zu verwechseln mit sogenannten Wertsendungen). Wird nun ein eingeschriebener Brief einem Postdienstleister P übergeben, wird zur Freimachungsidentität W-Idₖ ein weiterer Parameter abgelegt. Dieser Parameter bewirkt, dass in der weiteren Beförderung solcher Briefe diese Briefe von den anderen Briefen separat befördert und an «neuralgischen» Punkten entsprechend erfasst werden. «Neuralgisch» meint hier: Punkte bei denen ein erhöhtes Fehler- oder Verlustrisiko besteht. Die Verarbeitung der Sendungen richtet sich nach der Freimachungsidentität W-Idₖ, genau: Zur betreffenden Freimachungsidentität W-Idₖ sind die weiteren gespeicherten Werte abgelegt. Diese Werte (auch Parameter genannt) bestimmen die weitere Verarbeitung einer Sendung S. Bei der Zustellung 22 einer eingeschriebenen Sendung S an einen Empfänger 23 quittiert der Empfänger 23 nach den üblichen Verfahren durch Unterschrift auf einem Gerät. Dieses Gerät ist gleich wie ein Leser R einzustufen. Aufgrund der übermittelten Information und der zu der betreffenden Freimachungsidentität W-Idₖ abgelegten Parameter zur Behandlung einer solchen Sendung S, wird eine Rückwärtsquittung an den Absender 1 einer solchen Sendung S gesandt. Damit ist auch ausgedrückt, dass eingeschriebene Sendungen zu ihrer Validierung zwingend einen Absender 1 aufweisen müssen und zwar physisch auf der Sendung und in den zusätzlichen Werten (auch Parameter genannt) bei der erstmaligen Erfassung. Die Koordinaten bzw. Adresse des Absenders 1 wird initial bei der Einbuchung einer Freimachungsidentität W-Idₖ ebenfalls gespeichert.

In analoger Weise können bei der Aufgabe oder der erstmaligen Erfassung einer Sendung S deren Gewicht, Dimension und Destination erfasst werden. Diese Werte sind wiederum einer Freimachungsidentität W-Idₖ zugeordnet, die tatsächlichen Werte/Parameter sind jedoch in einem Knoten Nᵢ einer Blockchain B als Transaktion zur zugehörigen Freimachungsidentität W-Idₖ gespeichert, wobei wie vorstehend ausgeführt, diese Speicherung in einem Knoten Nᵢ der Blockchain B nicht in Echtzeit vorgenommen zu werden braucht. Die vorstehend erläuterten Werte/Parameter sind genauso als Transaktionen zu betrachten wie lediglich das Erfassen einer Sendung S an irgendeinem Punkt im Sendungsverlauf durch einen Leser R.

Figur 3 zeigt in einer vereinfachten Übersicht die involvierten funktionalen und statischen Komponenten des vorgeschlagenen computerimplementierten Verfahrens. Die Blockchain B ist als verteiltes Datenbanksystem realisiert, bei dem die einzelnen Blöcke Nᵢ durch Pointer miteinander verlinkt sind. Verteilt heisst hier insbesondere, dass die einzelnen Blöcke Nᵢ, Nᵢ₊₁ ... keine bestimmte geographische Zuordnung oder eine Zuordnung zu einem bestimmten Server aufweisen. Die Integrität der Blöcke Nᵢ ist durch einen Hashwert - (ebenfalls im betreffenden Block Nᵢ abgelegt. Der Zugriff zur Speicherung in den Blöcken Nᵢ, N_{i'}, ... erfolgt über ein sogenanntes Orakel 30. Die verschiedenen Leser R in den Anlagen 10, 11, 20, ... der Postdienstleister P₁, P₂ sind mit dem Orakel 30 verbunden. In einer konkreten Ausführung der vorliegenden Erfindung werden die von den Lesern R erfassten Werte zusammengefasst und zusammen mit den erfassten Freimachungsidentitäten in Datenpuffern oder in Servern zwischengespeichert und in einer entsprechenden Vielzahl dem Orakel 30 zur Ablage in einem Block Nᵢ der Blockchain B übermittelt.

Für die Abrechnungen der Logistikdienstleistung aufgrund der in der Blockchain B gespeicherten und den einzelnen Postdienstleistern P, P₁, P₂ zuzuordnenden Transaktionen ist ein Regelwerk als SmartContract vorgesehen. Die Werte der Abrechnung können in einem sogenannten Wallet 33 abgelegt werden, von wo aus die weitere nach bekannten Verfahren erfolgende Verrechnung in Cash oder in einem digitalen Zahlungsmittel erfolgt. Dabei ist pro Postdienstleister P, P₁, P₂ je ein Wallet 33 vorgesehen (nicht dargestellt in den Figuren).

Fig 2 zeigt die prinzipielle Struktur der Knoten Nᵢ einer Blockchain. Mit CRC ist ein Hashwert über den ganzen Knoten Nᵢ zur Sicherung der Authentizität des betreffenden Knotens bezeichnet. Im Headerᵢ ist die Struktur und Grösse des betreffenden Knotens Nᵢ festgelegt. Die Transaktion Ti₁, Ti₂, beinhalten eine Mehrzahl von Freimachungsidentitäten F-Id und gegebenfalls zusätzliche beim Sendungsverlauf erfasste Daten wie vorstehend beschrieben. Also Daten, die über die Leser R gewonnen werden. Ebenso als Transaktion ist ausführbarer Programmcode enthalten, der zB einen SmartContract bildet oder der für die Prüfung der von den Lesern R erfassten Freimachungsidentitäten W-Id eingesetzt wird. Dieser Programmcode kann in einer Blockchainmiddleware oder in einer Middleware ausserhalb der betreffenden Blockchain B ablaufen. Aus Performancegründen ist auch eine Implementierung möglich, bei der die von den Lesern erfassten Werte nicht direkt, sondern nur über ihre Hashwerte abgelegt werden.

Das hiermit beschriebene Ausführungsbeispiel schränkt die vorliegende Erfindung nicht ein. Je nach den gesetzlichen oder organisatorischen Randbedingungen für Postdienstleister können die Leser R zur Erfassung der Freimachungsidentität W-Id auch anders im Postbearbeitungsverlauf angeordnet werden und die erfassten Daten der Sendungen S wie Destination, Gewicht, Dimension, Zuordnung zu den Anlagen brauchen nicht so ausgebildet zu sein wie vorstehend beschrieben. Andere Kombinationen von Daten, Lesern und der Ablage in Knoten Nᵢ einer Blockchain B können vom Fachmann vorgenommen werden, ohne den Schutzumfang der Erfindung zu verlassen.

### Liste der Bezugszeichen, Glossar

- B: Blockchain
- F-Id, F-Idᵢ: Freimachungsidentität
- vF-Id, vF-Idᵢ: verschlüsselte Freimachungsidentität
- R-Id, R-Idⱼ: Identität eines Lesegerätes
- W-Id, W-Idₖ: Freimachungsidentität auf einem Wertzeichen W
- N; Nᵢ: Knoten einer Blockchain, Block einer Blockchain
- P; Pᵢ, P₂: Postdienstleister
- R; Rₗ: Lesegerät, Leser
- S: Sendung
- W; Wₖ: Wertzeichen
- i, j, k, l: Indizes aus dem Wertevorrat 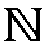 ₀
- 1: Absender
- 5: Transport auf Landweg, Luftweg, Seeweg
- 10: Posteinsammlung
- 11: Abgangssortierung
- 20: Eingangssortierung
- 21: Zustellstützpunkt
- 22: Zustellung
- 23: Empfänger
- 30: Oracle
- 31: Wertzeichendruckerei, Wertzeichenhersteller Freistempler
- 32: autorisierte Stelle, Freimachungsidentitätsherausgeber
- 33: Wallet

### Quellen, Literaturliste

- [1]: QR-Code
https://de.wikipedia.org/wiki/QR-Code
eingesehen am 25. März 2018
- [1]: Turing-vollständig
https://de.wikipedia.org/wiki/Turing-Vollständigkeit
eingesehen am 28. März 2018

## Patentansprüche

1. Computerimplementiertes Verfahren zur Freimachung postalischer Sendungen (S) und zur Abrechnung einer Logistikleistung zwischen Postdienstleistern (P; P₁, P₂) mit den Verfahrensschritten:
- Anbringen eines maschinenlesbaren und eine eindeutige Freimachungsidentifikation (W-Id) aufweisenden Wertzeichens (W) auf einer zu befördernden Sendung (S),
- Beförderung der Sendung (S) von einem Absender (1) und Zustellung zu einem Empfänger (23) durch Postdienstleister (P; P₁, P₂) als Logistikleistung;
**gekennzeichnet durch** die Verfahrensschritte
- die Freimachungsidentifikation (F-Idᵢ) ist in einem Knoten (Nᵢ) einer Blockchain (B) gespeichert;
- die Freimachungsidentifikation (W-Idₖ) des auf der zu befördernden Sendung (S) angebrachten Wertzeichens (W) wird in einer Anlage (10, 11, 20, 21, 22) eines ersten Postdienstleisters (P₁) durch einen Leser (R) erfasst;
- die erfasste Freimachungsidentifikation (W-Idₖ) wird mit der im betreffenden Knoten (Nᵢ) der Blockchain (B) gespeicherten Freimachungsidentifikation (F-Idᵢ) verglichen;
- bei Feststellung von Gleichheit gilt die Freimachungsidentifikation (F-Id) als aktiv und wird als Transaktion in einem Knoten (N_{i'}) der Blockchain (B) als «aktiv» gespeichert;
- bei der weiteren Beförderung der Sendung (S) durch Anlagen (10, 11, 20, 21, 22) der Postdienstleister (P₁, P₂) wird die auf der Sendung (S) angebrachte Freimachungsidentifikation (W-Id) durch der jeweiligen Anlage (10, 11, 20, 21, 22) zugeordnete Leser (R) erfasst und zusammen mit der Identität der Anlage (10, 11, 20, 21, 22) einschliesslich der Identität des betreffenden Postdienstleisters (P₁, P₂) und einem Zeitstempel der Erfassung in einem Knoten (N_{i'}) der Blockchain (B) als Transaktion gespeichert;
- die Abrechnung der Logistikleistung erfolgt durch eine Auswertung der wenigstens einem Postdienstleister (P₁, P₂) zuzuordnenden in der Blockchain (B) gespeicherten Transaktionen.

2. Verfahren nach Anspruch 1,
**dadurch gekennzeichnet, dass**
bei der erstmaligen Erfassung der Freimachungsidentifikation (W-Id) die in einem Knoten (Nᵢ) der Blockchain (B) gespeicherte Freimachungsidentifikation (F-Idᵢ) als «verbraucht» gekennzeichnet wird.

3. Verfahren nach Anspruch 1 oder 2,
**dadurch gekennzeichnet, dass**
vor der Zustellung an den Empfänger (23) die auf der Sendung (W) angebrachte Freimachungsidentifikation (W-Idₖ) erfasst wird und die entsprechende in einem Knoten (Nᵢ) der Blockchain (B) gespeicherte Freimachungsidentifikation (F-Idᵢ) als «entwertet» gekennzeichnet wird.

4. Verfahren nach Anspruche 3,
**dadurch gekennzeichnet, dass**
die Abrechnung der Logistikleistung auf jenen einem Postdienstleister (P₁, P₂) zuzuordnenden in der Blockchain (B) gespeicherten Transaktionen basiert, die die Kennzeichnung «entwertet» enthalten.

5. Verfahren nach einem der Ansprüche 2 bis 4,
**dadurch gekennzeichnet, dass**
bei der erstmaligen Erfassung der Freimachungsidentifikation (W-Id) einer Sendung (S) ein zusätzlicher Parameter mit der Bedeutung «eingeschriebener Brief» und die Adresse des Absenders (1) als Transaktion in einem Knoten (Nᵢ) der Blockchain (B) abgelegt wird.

6. Verfahren nach Anspruch 5,
**dadurch gekennzeichnet, dass**
der Empfang der Sendung (S) durch den Empfänger (23) über ein Gerät quittiert wird und dadurch ein entsprechender Eintrag zur betreffenden Freimachungsidentifikation (W-Idₖ) in der Blockchain (B) veranlasst wird, der eine Aussendung einer Empfangsbestätigung an den Absender (1) veranlasst.

7. Verfahren nach einem der Ansprüche 1 bis 6,
**dadurch gekennzeichnet, dass**
bei der erstmaligen Erfassung der Freimachungsidentifikation (W-Idₖ) einer Sendung (S) geprüft wird, ob die in der Blockchain (B) gespeicherte Freimachungsidentifikation (F-Idᵢ) bereits als «aktiv» gekennzeichnet ist und falls zutreffend eine Ausschleusung der betreffenden Sendung (S) veranlasst wird.

8. Verfahren nach einem der Ansprüche 1 bis 7,
**dadurch gekennzeichnet, dass**
die Freimachungsidentitäten (F-Id) von einer von einem Postdienstleister (P) autorisierten Stelle (32) generiert werden und über ein Wallet (33) in Knoten (Nₖ) erstmalig gespeichert werden.

9. Verfahren nach einem der Ansprüche 1 bis 8,
**dadurch gekennzeichnet, dass**
die Abrechnung der Logistikleistung mittels eines Smart-Contracts erfolgt, wobei der Smartcontract als ausführbarer Programmcode in einem Knoten (Nₖ) gespeichert ist und die Auswertung auf den der wenigstens einem Postdienstleister (P₁, P₂) zuzuordnenden in der Blockchain (B) gespeicherten Transaktionen basiert.

10. Verfahren nach Anspruche 9,
**dadurch gekennzeichnet, dass**
Daten zur Abrechnung in einem einem Postdienstleister (P; P₁, P₂) zugeordneten Wallet (33) abgespeichert werden und die Abrechnung zwischen den Postdienstleistern (P; P₁, P₂) mit einem digitalen Zahlungsmittel erfolgt.

11. Verfahren nach einem der Ansprüche 1 bis 10,
**dadurch gekennzeichnet, dass**
als Transaktionen Hashwerte von von den Lesern (R) erfassten Parametern in Knoten (Nᵢ) der Blockchain (B) gespeichert werden.

12. System zur Abrechnung einer Logistikleistung zwischen Postdienstleistern umfassend Mittel zur Ausführung der Verfahrensschritte des Verfahrens nach einem der Ansprüche 1 bis 11.
